Europäisches Patentamt

European Patent Office

Office européen des brevets

(11) Veröffentlichungsnummer: **0 299 416**

**A1**

## (12) EUROPÄISCHE PATENTANMELDUNG

(21) Anmeldenummer: **88111082.9**

(22) Anmeldetag: **12.07.88**

(51) Int. Cl.⁴: **A01D 33/10**

(30) Priorität: **14.07.87 DE 8709655 U**
**30.06.88 DE 3822523**

(43) Veröffentlichungstag der Anmeldung:
**18.01.89 Patentblatt 89/03**

(84) Benannte Vertragsstaaten:
**BE DE ES FR GB GR IT LU NL**

(71) Anmelder: **Maschinenfabrik Niewöhner GmbH**
**& Co. KG**
**Immelstrasse 170**
**D-4830 Gütersloh 1(DE)**

(72) Erfinder: **Niewöhner, Bruno, sen.**
**Alexanderweg 20**
**D-4830 Gütersloh 11(DE)**
Erfinder: **Niewöhner, Bruno, jun. Dipl.**
**Kaufmann**
**Alexanderweg 40**
**D-4830 Gütersloh 11(DE)**

(54) **Mohrrübenvollerntemaschine.**

(57) Eine Mohrrübenvollerntemaschine besitzt eine Auszieheinrichtung und eine Transporteinrichtung. Die Auszieh- und Transporteinrichtung (3) ist schräg nach hinten ansteigend angeordnet und endet an einer Trennvorrichtung (11) zum Trennen der Mohrrüben von ihrem Laub. Unterhalb der Trennvorrichtung (11) ist ein Quertransportband (1) angeordnet, das über einem Vorratsbunker (2) endet. Der Vorratsbunker (2) ist am hinteren Ende der Mohrrübenvollerntemaschine angeordnet und mittels einer Führung und eines Antriebs höhenverfahrbar.

Fig. 2

### Mohrrübenvollerntemaschine

Die Erfindung betrifft eine Mohrrübenvollerntemaschine mit einer Auszieh- und Transporteinrichtung, die schräg nach hinten ansteigend angeordnet ist und an einer Trennvorrichtung zum Trennen der Mohrrüben von ihrem Laub endet, ferner mit einem Quertransportband zum Fördern der Mohrrüben und einem Vorratsbunker für die geernteten Mohrrüben.

Bei einer bekannten Mohrrübenvollerntemaschine dieser Art schließt sich an das an der Rückseite der Maschine angeordnete Quertransportband ein auf der Seite nach vorn verlaufendes weiteres Transportband an, das die Mohrrüben in einen Vorratsbunker fördert. Das an der Seite längs verlaufende Förderband steigt schräg nach oben an, damit es in den vergleichsweise hoch angeordneten Vorratsbunker fördern kann. Eine hohe Anordnung des Vorratsbunkers ist deshalb nötig, damit der Vorratsbunker über die Bordwand von landwirtschaftlichen Anhängern entleert werden kann.

Nachteilig bei der bekannten Mohrrübenvollerntemaschine ist die Tatsache, daß durch die Übergabe auf verschiedene Förderbänder die Mohrrüben auf dem Weg in den Bunker leicht beschädigt werden können.

Es ist auch bereits ein Sammelbehälter für Erdfruchterntemaschinen bekannt (DE-AS 12 20 193), welcher, höhenverfahrbar ist. Auch dieser höhenverfahrbare Bunker wird mit einem in Fahrtrichtung der Erdfruchterntemaschine verlaufenden Förderband beschickt. Auch bei dieser bekannten Vorrichtung sind mehrfache Übergaben des Ernteguts erforderlich mit den sich aus diesen Übergaben ergebenden Beschädigungsmöglichkeiten. Das Vorsehen von langen Förderstrecken ist zudem aufwendig und teuer und steigert das Gewicht derartiger Maschinen.

Ausgehend von dem eingangs erwähnten Stand der Technik liegt der Erfindung die Aufgabe zugrunde, eine Mohrrübenvollerntemaschine der als bekannt vorausgesetzten Art so auszubilden, daß die Mohrrüben auf kurzem Weg in den Vorratsbunker transportiert werden. Dabei soll auf Übergaben der geernteten Mohrrüben von einem auf ein weiteres Transportband verzichtet werden.

Die Lösung dieser Aufgabe erfolgt dadurch, daß das Quertransportband über dem am hinteren Ende der Mohrrübenvollerntemaschine angeordneten Vorratsbunker endet, der mittels einer Führung und eines Antriebs höhenverfahrbar ausgebildet ist.

Durch die höhenverfahrbare Ausbildung des Vorratsbunkers ist es möglich, auf ein zusätzliches Transportband vollständig zu verzichten. Es können die vom Laub getrennten Mohrrüben über ein kurzes Band direkt in den Vorratsbunker gefördert werden. Die Belastung der geernteten Mohrrüben ist dabei äußerst gering. Wenn der Bunker entleert werden soll, kann er in die gewünschte Entleerungshöhe gefahren und anschließend durch Betätigung des Rollbodens in den Ackerwagen entleert werden.

Nachstehend wird eine bevorzugte Ausführungsform der Erfindung anhand der Zeichnung beschrieben. Es zeigen:

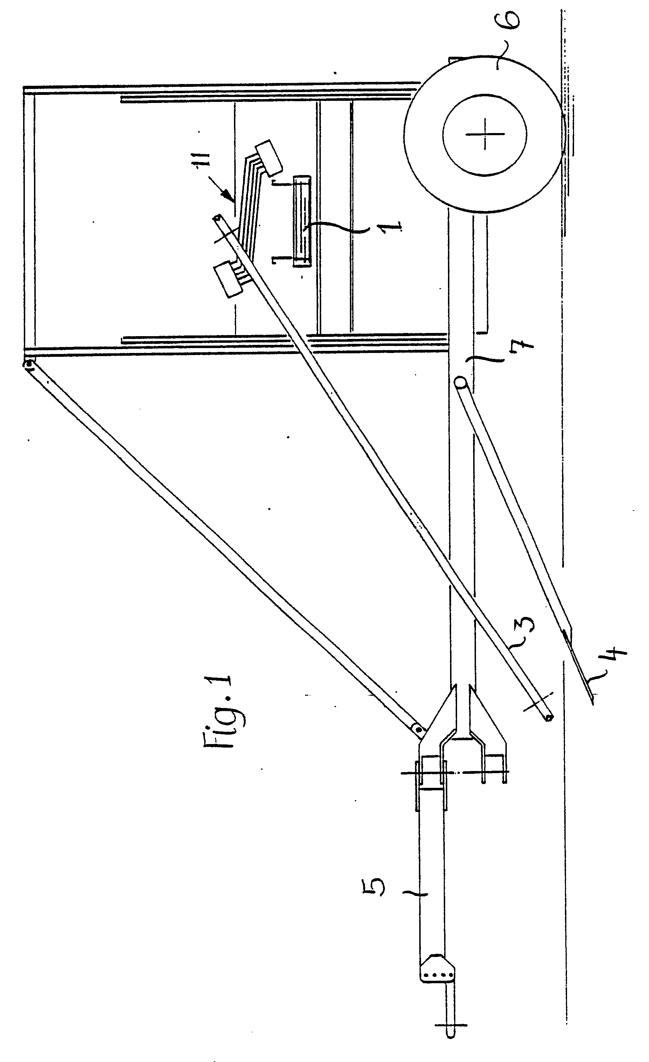

Figur 1 - eine schematische Seitenansicht der Mohrrübenvollerntemaschine.

Figur 2 - eine Rückansicht der Maschine gemäß Figur 1.

An einem Chassis 7 sitzt ein Zugstück 5. Das Chassis 7 weist eine Achse mit zwei Laufrädern 6 und 8 auf. Auf der in Fahrtrichtung gesehen linken Seite erstreckt sich schräg ansteigend nach hinten und oben eine Auszieh- und Transporteinrichtung 3, die bekannt ist. Sie besteht aus zwei Riemenpaaren, welche die gezogenen Mohrrüben am Laub erfassen und bis in die am hinteren Ende angeordnete Trennvorrichtung 11 fördern. In der Trennvorrichtung wird das Laub von den Mohrrüben getrennt. Das Laub wird nach hinten abgeworfen und die Mohrrüben fallen auf das Quertransportband 1. Das Schar 4 dient zur Auflockerung des Bodens und zum Vorbereiten des Ausziehvorgangs mit Hilfe der Auszieh- und Transporteinrichtung 3.

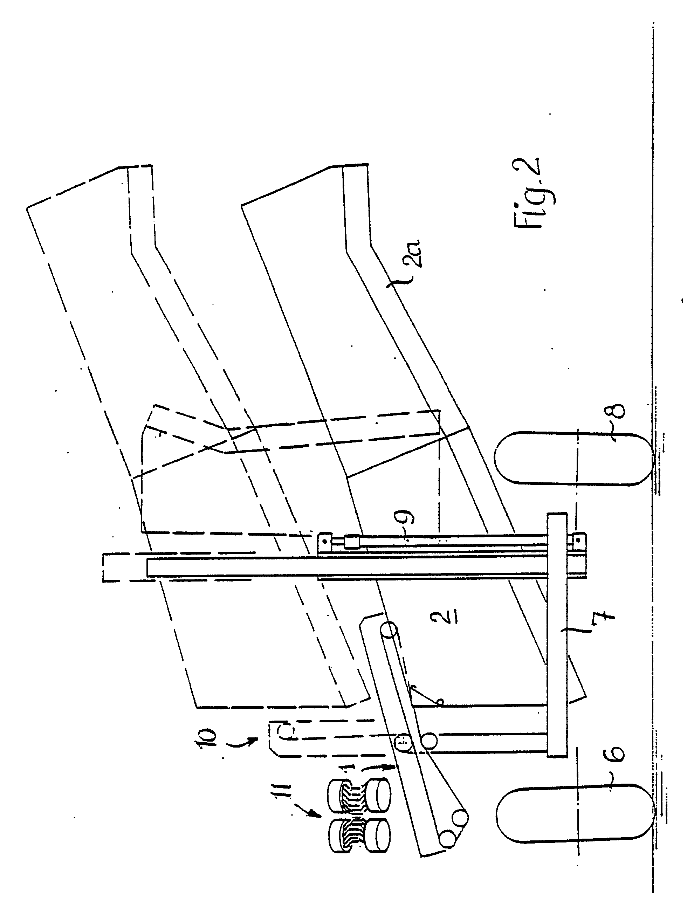

Das Quertransportband fördert die vom Laub getrennten Mohrrüben in den Bunker 2, dessen gemäß Figur 2 rechter Bereich 2a klappbar nach oben am inneren Bereich angelenkt ist. Der Bunker 2 ist mit Hilfe einer Kolben-Zylinder-Einheit und einer nicht näher dargestellten Rollenführung 10 aus der durchgezogen dargestellten Position in die gestrichelte Position nach oben verfahrbar. In der oberen Position kann die Entladung des Vorratsbunkers erfolgen.

### Ansprüche

1. Mohrrübenvollerntemaschine mit einer Auszieh- und Transporteinrichtung, die schräg nach hinten ansteigend angeordnet ist und an einer Trennvorrichtung zum Trennen der Mohrrüben von ihrem Laub endet, ferner mit einem Quertransportband zum Fördern der Mohrrüben und einem Vorratsbunker für die geernteten Mohrrüben,
dadurch gekennzeichnet,
daß das Quertransportband (1) über dem am hinteren Ende der Mohrrübenvollerntemaschine angeordneten Vorratsbunker (2) endet, der mittels einer Führung und eines Antriebs höhenverfahrbar ausgebildet ist.

2. Mohrrübenvollerntemaschine nach Anspruch 1, dadurch gekennzeichnet,
daß der Boden des Vorratsbunkers (2) zur Seite hin ansteigend ausgebildet ist.

3. Mohrrübenvollerntemaschine nach Anspruch 1 oder 2, dadurch gekennzeichnet,
daß der zur Seite vorstehende Bereich (2a) des Vorratsbunkers (2) nach oben klappbar ausgebildet ist.

Fig.1

5

11

1

3

4

7

6

EP 0 299 416 A1

Fig.2

EP 0 299 416 A1

| | | Nummer der Anmeldung |
|---|---|---|

# EUROPÄISCHER RECHERCHENBERICHT

Europäisches Patentamt

| EINSCHLÄGIGE DOKUMENTE | | | EP 88111082.9 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.4)** |
| X | DE - B - 1 174 097 (DIPL.ING. WALTER STOLL)<br><br>* Spalte 3, Zeilen 29-32, 38-42, 36ff; Fig. 1,2 *<br><br>-- | 1,2,3 | A 01 D 33/10 |
| A | DE - B - 1 130 636 (MASCHINEN-FABRIK SCHMOTZER GMBH)<br><br>* Fig. 1 *<br><br>-- | 1,2,3 | |
| A | DE - A1 - 2 638 963 (WILHELM STOLL MASCHINENFABRIK GMBH)<br><br>* Seite 10, Zeile 9ff *<br><br>-- | 1,2,3 | |
| D,A | DE - B - 1 220 193 (MASCHINEN-FABRIK NIEWÖHNER GMBH)<br><br>* Fig. 1 *<br><br>-- | 1,2 | **RECHERCHIERTE SACHGEBIETE (Int. Cl.4)** |
| A | DE - B - 1 172 191 (FA. A. J. TRÖSTER)<br><br>* Anspruch 1; Fig. 1 *<br><br>-- | 1,2 | A 01 D 13/00<br><br>A 01 D 17/00<br><br>A 01 D 31/00 |
| A | DE - B - 1 205 331 (FA. FRANZ KLEINE)<br><br>---- | | A 01 D 33/00<br><br>B 65 G 67/00 |

Der vorliegende Recherchenbericht wurde für alle Patentansprüche erstellt.

| Recherchenort | Abschlußdatum der Recherche | Prüfer |
|---|---|---|
| WIEN | 22-09-1988 | SCHNEEMANN |